# EUROPÄISCHE PATENTSCHRIFT

(11) **EP 2 351 203 B1**
(45) Veröffentlichungstag und Bekanntmachung des Hinweises auf die Patenterteilung: **27.03.2013**
(21) Anmeldenummer: 09740315.8
(22) Anmeldetag: 21.10.2009
(51) Int. Cl.: H02P 6/18

(54) **VERFAHREN ZUM BETREIBEN EINES ELEKTROMOTORS**
METHOD FOR OPERATING AN ELECTRIC MOTOR
PROCÉDÉ D'UTILISATION D'UN MOTEUR ÉLECTRIQUE

(30) Priorität: 23.10.2008 DE 102008052933
(43) Veröffentlichungstag der Anmeldung: 03.08.2011
(73) Patentinhaber: Zentrum Mikroelektronik Dresden AG, 01109 Dresden (DE)
(72) Erfinder: SCHMIDT, Franz-Josef, 33154 Salzkotten (DE)
(74) Vertreter: Lippert, Stachow & Partner
(86) Internationale Anmeldenummer: PCT/EP2009/063787
(87) Internationale Veröffentlichungsnummer: WO 2010/046386

(56) Entgegenhaltungen:
- EP-A1- 1 267 479
- EP-A2- 1 136 828
- DE-A1-102006 032 491
- US-A- 6 034 493
- US-A1- 2003 210 011

## Beschreibung

Die Erfindung betrifft ein Verfahren zum Betreiben eines Elektromotors, der ein Primärteil und ein Sekundärteil aufweist, wobei das Primärteil eine Wicklungsstränge aufweisende, mehrphasige Erregerwicklung hat, deren Phasenanschlüsse jeweils mit einem Ausgangsanschluss einer Endstufe verbunden sind, wobei die Endstufe zum Anlegen von Phasenspannungen an die Ausgangsanschlüsse steuerbare Halbleiterschalter hat, umfassend folgende Schritte:
a) Einleiten einer Betriebsphase durch Anlegen der Phasenspannungen an die Ausgangsanschlüsse der Endstufe, derart, dass in der Erregerwicklung ein magnetisches Wanderfeld induziert wird, welches eine Relativbewegung zwischen dem Primärteil und dem Sekundärteil bewirkt,
b) Abschalten der Phasenspannung an mindestens einem der Ausgangsanschlüsse, um eine Messphase einzuleiten, wobei nach dem Abschalten der Phasenspannung der Wicklungsstrom in dem Wicklungsstrang (2a, 2b, 2c), für den die Phasenspannung abgeschaltet wurde, über mindestens ein, eine nichtlineare Kennlinie aufweisendes Freilaufelement (11a, 11b, 11c, 12a, 12b, 12c) geleitet und aufrechterhalten wird,
c) Messung der elektrischen Gegen-EMK, die in dem an diesem Ausgangsanschluss angeschlossenen Wicklungsstrang durch die Relativbewegung zwischen Primär- und Sekundärteil induziert wird, um die Winkeldifferenz zwischen der Phasenlage des Erregerstroms und derjenigen der Gegen-EMK zu bestimmen,
d) gegebenenfalls Wiederholen der Schritte a) bis c).

Ein derartiges Verfahren ist aus WO 2007/026241 A2 bekannt. Dabei werden über die Ausgangsanschlüsse der Endstufe elektrische Phasenspannungen an die Erregerwicklung angelegt. Die Phasenspannungen haben einen vorbestimmten Verlauf, bei dem die Spannung am Anfang, in der Mitte und am Ende einer Ansteuerphase jeweils für ein vorbestimmtes Zeitintervall gleich Null ist. Während einer Betriebsphase, in der die Phasenspannungen nicht gleich null sind, wird mit Hilfe der Erregerwicklung ein elektromagnetisches Wanderfeld in dem Primärteil erzeugt, das mit dem Sekundärteil zusammenwirkt und dieses antreibt. Während eines Zeitintervalls, in dem eine Phasenspannung gleich null ist, wird eine Messphase eingeleitet, in der die Phasenanschlüsse der Erregerwicklung über eine Schalteranordnung mit Messsignaleingängen eines Analog-Digitalkonverter verbunden werden, um die in der Erregerwicklung induzierte Gegen-EMK zu messen. Zu Beginn jeder Messphase wird zunächst abgewartet, bis ein Überschwingen des Wicklungsstroms ausreichend abgeklungen ist. Dann werden jeweils zwei Messwerte für die Gegen-EMK erfasst, aus denen ein Mikroprozessor durch Interpolation den Zeitpunkt des Nulldurchgangs der Gegen-EMK ermittelt. Aus dem Zeitpunkt des Nulldurchgangs ermittelt der Mikroprozessor die Winkeldifferenz zwischen der Phasenlage des Erregerstroms und derjenigen der Gegen-EMK. Dieser Winkeldifferenz entspricht der Relativposition zwischen Primär- und Sekundärteil.

Das Verfahren hat den Nachteil, dass bei jeder Messphase zunächst abgewartet werden muss, bis das Überschwingen des Wicklungsstroms abgeklungen ist, damit die Gegen-EMK überhaupt mit ausreichender Genauigkeit gemessen werden kann. Die für das Abklingen der Überschwingungen maßgebliche Zeitkonstante liegt bei üblichen Elektromotoren etwa im Bereich von einigen Millisekunden. Ungünstig ist außerdem, dass bei jeder Messphase jeweils zwei Messwerte für die Gegen-EMK gemessen werden müssen, die zeitlich soweit voneinander beabstandet sein müssen, dass der Nulldurchgang des Erregerstroms durch Interpolation dieser Messwerte bestimmt werden kann. Daher muss die Dauer der Messphase relativ lang gewählt werden. Während dieser Zeitdauer wird der Elektromotor aber nicht angetrieben, d.h. der Drehmomentverlauf ist ungleichmäßig. Dadurch reduzieren sich die Leistung und der Wirkungsgrad des Elektromotors. Außerdem kann die dem Drehmoment überlagerte Welligkeit akustische Störungen verursachen. Ein weiterer Nachteil des Verfahrens besteht darin, dass die Interpolation mit einem gewissen Rechenaufwand verbunden ist und Ungenauigkeiten aufweist.

Es besteht deshalb die Aufgabe, ein Verfahren der eingangs genannten Art zu schaffen, das einen möglichst gleichmäßigen Motorlauf ermöglicht und bei dem dennoch die Winkeldifferenz zwischen der Phasenlage des Erregerstroms und derjenigen der Gegen-EMK auf einfache Weise mit großer Präzision ermittelt werden kann.

Erfindungsgemäß wird diese Aufgabe nach Anspruch 1 dadurch gelöst, dass eine beim Nulldurchgang des in diesem Wicklungsstrang fließenden Wicklungsstromes auftretende Flanke in der Wicklungsspannung detektiert wird und als Triggersignal für die Messung der induzierten Gegen-EMK des betreffenden Wicklungsstrangs dient, dass nach einem Abklingen einer nadelförmigen Spannungsspitze zu einem Zeitpunkt T₂ eine Spannung der EMK U_{G} gemessen wird und dass aus der gemessenen Spannung der EMK U_{G} und vorbekannten Kenngrößen des Elektromotors eine Winkeldifferenz zwischen der Phasenlage des Erregerstroms und derjenigen Phasenlage der Gegen-EMK bestimmt wird. Durch das erfindungsgemäße Verfahren ist es möglich, den Zeitpunkt des Nulldurchgangs des Wicklungsstromes auf einfache Weise mit großer Präzision zu detektieren. Unmittelbar nach der Messung der Gegen-EMK kann die Betriebsphase wieder aufgenommen und der Elektromotor über die Endstufe bestromt werden. Die Messphase wird vorzugsweise erst kurz vor dem Nulldurchgang des Wicklungsstromes eingeleitet, so dass dann gleich die Gegen-EMK gemessen werden kann. Durch das erfindungsgemäße Verfahren ist es möglich, die Messphasen sehr kurz zu wählen, so dass das Drehmoment nahezu unterbrechungsfrei am Elektromotor anliegt. Der Elektromotor ermöglich dadurch einen hohen Wirkungsgrad und einen gleichmäßigen Motorlauf. Der Elektromotor ist vorzugsweise ein bürstenloser Gleichstrommotor. Das Freilaufelement kann z.B. ein spannungsabhängiger Widerstand (VDR) sein.

Vorteilhaft ist, wenn das Freilaufelement eine Halbleiterdiode ist. Die Halbleiterdiode kann dabei kostengünstig in den Halbleiterchip des ihr zugeordneten Halbleiterschalters integriert sein.

Bei einer bevorzugten Ausgestaltung der Erfindung weisen die den einzelnen Wicklungssträngen zugeordneten Erregerströme und/oder deren gleitende Mittelwerte vorzugsweise einen etwa sinusförmigen Verlauf auf, wobei die an der Erregerwicklung anliegenden Phasenspannungen entsprechend pulsweitenmoduliert werden. Durch die sinusförmige Ansteuerung der Erregerwicklung kann ein gleichmäßiges Drehmoment und somit ein besonders ruhiger Motorlauf des Elektromotors erreicht werden. Die Pulsweitenmodulation ermöglicht eine verlustarme Ansteuerung der Erregerwicklung.

Bei einer vorteilhaften Ausführungsform der Erfindung wird nach dem Abschalten einer an einem ersten Ausgangsanschluss der Endstufe anliegenden ersten Phasenspannung der Wicklungsstrom des abgeschalteten Wicklungsstrangs über eine erstes Freilaufelement in Durchlassrichtung geleitet, wobei an dem Freilaufelement eine Durchlassspannung abfällt, und wobei der Einfluss der Durchlassspannung auf die an dem betreffenden Wicklungsstrang anliegende Spannung durch Verändern mindestens einer an wenigstens einem zweiten Ausgangsanschluss anliegenden zweiten Phasenspannung kompensiert wird. Die Kompensation erfolgt dabei vorzugsweise derart, dass das Puls-Pausenverhältnis der Phasenspannungen für die Wicklungsstränge, in denen der Wicklungsstrom nicht abgeschaltet wurde, so verändert wird, dass der durch die Durchlassspannung an dem abgeschalteten Wicklungsstrang hervorgerufene Spannungsanstieg unterdrückt wird. Durch diese Maßnahme wird eine störende Veränderung des Erregerstromes vermieden.

Vorteilhaft ist, wenn während der Messung einer an einem Wicklungsstrang anliegenden Gegen-EMK die Schaltzustände der für die Ansteuerung der anderen Wicklungsstränge der Erregerwicklung vorgesehenen Halbleiterschalter beibehalten werden. Dadurch wird vermieden, dass der Gegen-EMK Störungen überlagert werden, die beim Verändern der Schaltzustände eines Halbleiterschalters auftreten können. Bei einem Elektromotor mit dreiphasiger Erregerwicklung kann während der Messung beispielsweise ein erster Phasenanschluss der Erregerwicklung hochohmig, eine zweiter Phasenanschluss mit einem Versorgungsspannungspotential und ein dritter Phasenanschluss mit Massepotential verbunden sein.

Bei einer bevorzugten Ausgestaltung der Erfindung werden Sollwertsignale für die Phasenspannungen erzeugt, wobei die Sollwertsignale mit an die Ausgangsanschlüsse angelegten Istwertsignalen für die Phasenspannungen verglichen werden, und wobei beim Auftreten einer Abweichung zwischen den Sollwertsignalen und den Istwertsignalen während der Betriebsphase(n) die Ansteuerung der Erregerwicklung im Sinne einer Reduzierung der Abweichung verändert wird. Die Sollwertsignale werden also über einen Regelkreis an die Erregerwicklung angelegt. Dadurch ist es möglich, störende Veränderrungen des Erregerstromes, die durch das Abschalten eines Wicklungsstrangs und/oder das Beibehalten eines Schaltzustandes eines Halbleiterschalters während einer Messphase auftreten, nach Beendigung der Messphase zumindest teilweise zu kompensieren. So kann beispielsweise nach dem Wiedereinschalten eines Wicklungsstrangs mindestens eine Pulsphase einer an den betreffenden Wicklungsstrang angelegten Phasenspannung verlängert werden, um mindestens einen "verloren gegangenen" Puls, der während der Abschaltphase des Wicklungsstrangs eigentlich an den Wicklungsstrang hätte ausgegeben werden müssen, nachzuholen.

Zweckmäßigerweise werden die Gegen-EMK(en) gegen einen Sternpunkt der Erregerwicklung und/oder einen virtuellen Sternpunkt gemessen. Der virtuelle Sternpunkt kann dabei beispielsweise durch ein Widerstandsnetzwerk nachgebildet werden. Somit kann die Gegen-EMK gegen das am Sternpunkt der Erregerwicklung anliegende Potential gemessen werden, ohne dass der Sternpunkt am Elektromotor zugänglich ist.

Vorteilhaft ist, wenn in einer Messphase mindestens zwei Messwerte für die Gegen-EMK eines Wicklungsstrangs gemessen werden, wenn beim Erfassen jedes Messwerts jeweils an die Ausgangsanschlüsse für die übrigen Wicklungsstränge unterschiedliche elektrische Potentiale ausgegeben werden, und wenn die Schaltzustände der mit diesen Ausgangsanschlüssen verbundenen Halbleiterschalter beim Erfassen eines ersten Messwerts invers zu den Schaltzuständen gewählt werden, welche die Halbleiterschalter beim Erfassen eines zweiten Messwerts aufweisen. Aus den beiden Messwerten kann dann der Mittelwert gebildet werden, wodurch der Einfluss von Toleranzen beispielsweise der Halbleiterschalter, der Widerstände des virtuellen Sternpunktes und/oder der Impedanzen der Wicklungsstränge der Erregerwicklung auf die Gegen-EMK kompensiert wird.

Bei einer vorteilhaften Ausführungsform der Erfindung werden die Pulsweitenmodulationen der Phasenspannungen für die Wicklungsstränge, an denen die Gegen-EMK während einer Messphase nicht gemessen wird, zueinander phasenversetzt durchgeführt, vorzugsweise mit einem Phasenversatz von einer halben Periode. Dadurch können EMV-Störungen, die beim Umschalten der Halbleiterschalter in dem Messsignal für die Gegen-EMK auftreten können, abgeschwächt werden.

Vorteilhaft ist, wenn die Taktfrequenz der Pulsweitenmodulation jeweils vor dem Einleiten einer Messphase erhöht wird. Auch durch diese Maßnahme können EMV-Störungen in dem Messsignal für die Gegen-EMK reduziert werden.

Zweckmäßigerweise wird die Pulsweitenmodulation der Phasenspannungen derart in Abhängigkeit von einer die Endstufe speisenden Betriebsspannung verändert, dass der Einfluss von Schwankungen der Betriebsspannung auf den Erregerstrom zumindest teilweise kompensiert wird. Dabei wird bei einer Abnahme der Betriebsspannung die Pulsweite der Phasenspannungen entsprechend vergrößert und bei einer Zunahme der Betriebsspannung reduziert. Dadurch kann ein noch gleichmäßigerer Motorlauf erreicht werden.

Bei einer bevorzugten Ausgestaltung des Verfahrens wird die Zeit, die nach dem Detektieren eines Nulldurchgangs des Wicklungsstromes vergeht, gemessen und mit einem Referenzwert verglichen, wobei in Abhängigkeit vom Ergebnis dieses Vergleichs eine weitere Messphase eingeleitet wird. Dabei kann der Referenzwert dem zeitlichen Abstand zwischen zwei aufeinanderfolgenden früheren Nulldurchgängen entsprechen oder aus den Zeitpunkten von mehr als zwei früheren Nulldurchgängen ermittelt werden.

Bei einer anderen Ausführungsform der Erfindung wird der Wicklungsstrom gemessen und mit einem Vergleichswert verglichen, wobei in Abhängigkeit vom Ergebnis dieses Vergleichs eine weitere Messphase eingeleitet wird. Die weitere Messphase kann beispielsweise gestartet werden, wenn der Wicklungsstrom betragsmäßig abnimmt und den vorbestimmten Referenzwert erreicht bzw. betragsmäßig unterschreitet.

Nachfolgend ist ein Ausführungsbeispiel der Erfindung anhand der Zeichnung näher erläutert. Es zeigt:
- Fig. 1: ein Schaltbild eines bürstenlosen Gleichstrommotors, dessen Erregerwicklung über eine Endstufe ansteuerbar ist, wobei die Endstufe nur teilweise dargestellt ist,
- Fig. 2: eine graphische Darstellung einer an einem Phasenanschluss der Erregerwicklung anliegenden pulsweitenmodulierten Phasenspannung, wobei auf der Abszisse die Zeit t und auf der Ordinate die Spannung U aufgetragen ist,
- Fig. 3: eine graphische Darstellung einer in Fig. 2 dargestellten Phasenspannung entsprechenden mittleren Phasenspannung, wobei auf der Abszisse die Zeit t und auf der Ordinate die Spannung U aufgetragen ist,
- Fig. 4: eine Schaltung zum Erzeugen eines Pulsweitenmodulationssignals für die Ansteuerung eines bürstenlosen Gleichstrommotors, und
- Fig. 5: eine graphische Darstellung der in den Wicklungssträngen der Erregerwicklung fließenden Wicklungsströme, wobei auf der Abszisse die Zeit t und auf der Ordinate der Strom I aufgetragen ist.

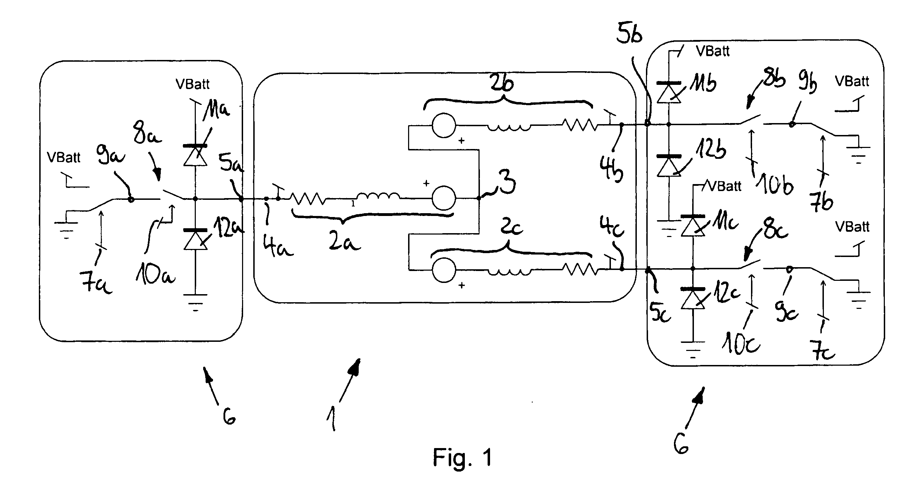

Bei einem Verfahren zum Betreiben eines Elektromotors wird als Elektromotor 1 ein in Fig. 1 nur schematisch in Form eines Ersatzschaltbilds dargestellter bürstenloser Gleichstrommotor bereitgestellt. Der Elektromotor 1 hat ein Primärteil und ein relativ dazu um eine Rotationsachse verdrehbar gelagertes Sekundärteil. Das Primärteil ist als Stator und das Sekundärteil als Läufer ausgestaltet. Der Elektromotor kann aber auch ein Linearmotor sein.

Das Primärteil weist eine mehrphasige Erregerwicklung auf, die drei Wicklungsstränge 2a, 2b, 2c hat, die jeweils mit ihrem einen Ende mit einem Sternpunkt 3 und mit ihrem anderen Ende mit einem aus dem Elektromotor 1 herausgeführten Phasenanschluss 4a, 4b, 4c verbunden ist. Jeder Phasenanschluss 4a, 4b, 4c ist jeweils an einem Ausgangsanschluss 5a, 5b, 5c einer in der Zeichnung nur teilweise dargestellten Endstufe 6 angeschlossen. Das Sekundärteil hat permanentmagnetische Pole, die in Umfangsrichtung voneinander beabstandet sind.

Die Endstufe 6 weist zum Anlegen von Phasenspannungen an die Phasenanschlüsse 4a, 4b, 4c steuerbare Halbleiterschalter auf, die jeweils einen ersten Steuereingang 7a, 7b, 7c haben, der zum Anlegen eines ersten Steuersignals mit einer in der Zeichnung nicht näher dargestellten Ansteuereinrichtung verbunden ist. Jedem Ausgangsanschluss 5a, 5b, 5c sind jeweils zwei zu einer Halbbrücke miteinander verbundene Halbleiterschalter zugeordnet. In Abhängigkeit von dem ersten Steuersignal können die Ausgangsanschlüsse 5a, 5b, 5c mit Hilfe der Halbleiterschalter entweder mit einem Versorgungsspannungspotential V_{Batt} oder mit Massepotential verbunden werden. Dabei fällt an dem jeweils leitenden Halbleiterschalter eine Sättigungsspannung ab.

Die den einzelnen Wicklungssträngen 2a, 2b, 2c zugeordneten Ausgangsanschlüsse 5a, 5b, 5c sind jeweils über einen steuerbaren Unterbrecher 8a, 8b, 8c mit einem dem betreffenden Wicklungsstrang 2a, 2b, 2c zugeordneten Brückenausgang 9a, 9b, 9c der Halbbrücke verbunden. Jeder Unterbrecher 8a, 8b, 8c weist jeweils einen zweiten Steuereingang 10a, 10b, 10c auf, der zum Anlegen eines zweiten Steuersignals mit der Ansteuereinrichtung verbunden ist. In Abhängigkeit von dem zweiten Steuersignal kann jeder Phasenanschluss 4a, 4b, 4c jeweils mit Hilfe des ihm zugeordneten Unterbrechers 8a, 8b, 8c mit dem Brückenausgang 9a, 9b, 9c der dem Phasenanschluss 4a, 4b, 4c zugeordneten Halbbrücke verbunden oder von diesem getrennt werden.

In Fig. 1 ist erkennbar, dass jeder Ausgangsanschluss 5a, 5b, 5c der Endstufe 6 jeweils über ein erstes Freilaufelement 11a, 11 b, 11c mit einem das Versorgungsspannungspotential V_{Batt} aufweisenden Versorgungsspannungsanschluss und über ein zweites Freilaufelement 12a, 12b, 12c mit einem Massepotentialanschluss verbunden ist. Als Freilaufelemente 11a, 11b, 11c, 12a, 12b, 12c sind Halbleiterdioden vorgesehen, die derart gepolt sind, dass sie sperren, wenn das elektrische Potential am Ausgangsanschluss 5a, 5b, 5c zwischen dem Massepotential und dem Versorgungsspannungspotential V_{Batt} liegt. Wenn die Freilaufelemente 11a, 11b, 11c, 12a, 12b, 12c In Durchlassrichtung bestromt werden, fällt an ihnen eine Durchlassspannung U_{D} ab.

Ist das Potential am Ausgangsanschluss 5a, 5b, 5c größer als die Summe aus dem Versorgungsspannungspotential V_{Batt} und der Durchlassspannung, ist das dem betreffenden Ausgangsanschluss 5a, 5b, 5c zugeordnete erste Freilaufelement 11a, 11 b, 11 c durchgeschaltet. Ist das Potential am Ausgangsanschluss 5a, 5b, 5c kleiner als der negative Betrag der Durchlassspannung, ist das dem betreffenden Ausgangsanschluss 5a, 5b, 5c zugeordnete zweite Freilaufelement 12a, 12b, 12c durchgeschaltet.

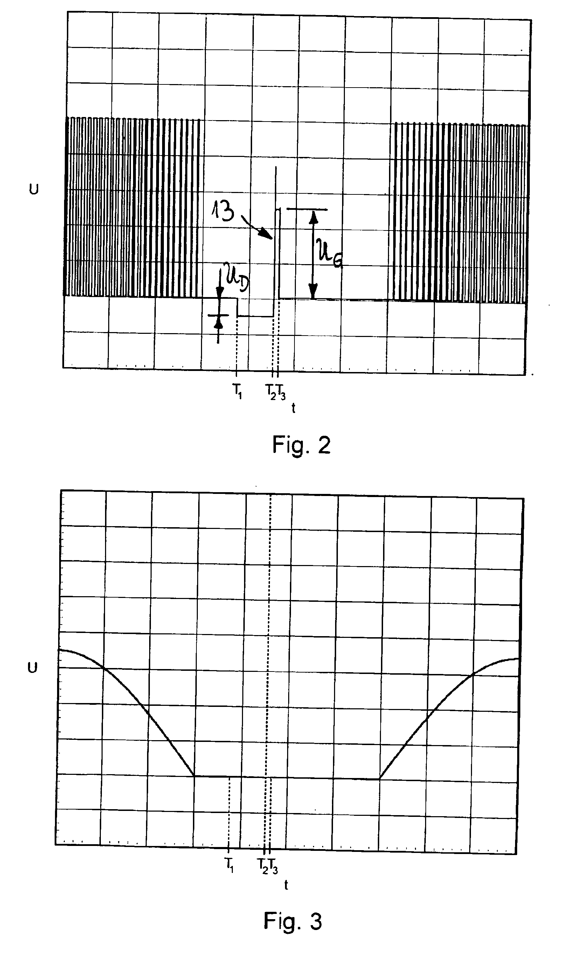

Bei dem erfindungsgemäßen Verfahren wird zunächst eine erste Betriebsphase durchgeführt, bei der mit Hilfe der Halbleiterschalter pulsweitenmodulierte Phasenspannungen derart an die Ausgangsanschlüsse 5a, 5b, 5c der Endstufe 6 angelegt werden, dass in der Erregerwicklung ein magnetisches Dreh- bzw. Wanderfeld induziert wird, welches eine Relativbewegung zwischen dem Primärteil und dem Sekundärteil bewirkt (Fig. 2). Bei der Pulsweitenmodulation werden die Ausgangsanschlüsse 5a, 5b, 5c abwechselnd mit dem Versorgungsspannungspotential V_{Batt} und mit dem Massepotential verbunden, wobei das Puls-Pausenverhältnis variiert wird. Die Pulsweitenmodulation der Phasenspannungen wird dabei so gewählt, dass die Wicklungsstränge von etwa sinusförmigen, um jeweils 120° phasenversetzt zueinander angeordneten Wicklungsströmen durchflossen werden. Alternativ ist es auch möglich, die Erregerwicklung während der ersten Betriebsphase blockzukommutieren. Während der ersten Betriebsphase wird die Frequenz der Wicklungsströme zum Anlaufen des Elektromotors 1 langsam erhöht, bis die Relativgeschwindigkeit zwischen Primärteil und Sekundärteil einen vorbestimmten Geschwindigkeitswert erreicht hat. Der aus der Pulsweitenmodulation resultierende Spannungsverlauf an einem ersten Wicklungsstrang ist in Fig. 3 dargestellt.

Anhand der Phasenlage der Wicklungsströme wird ein Schätzwert für einen Zeitpunkt T₁ ermittelt, an dem der Nulldurchgang des Wicklungsstroms in einem ersten Wicklungsstrang 2a kurz bevorsteht.

Sobald der Zeitpunkt T₁ erreicht ist, wird eine erste Messphase eingeleitet, indem der Signalpegel des am zweiten Steuereingang eines ersten Unterbrechers 8a anliegenden zweiten Steuersignals so verändert wird, dass der erste Unterbrecher 8a öffnet. Dadurch wird der erste Wicklungsstrang 2a hochohmig geschaltet.

Der Wicklungsstrom im ersten Wicklungsstrang 2a fließt nach dem Öffnen des Unterbrechers im Zeitpunkt T₁ zunächst über das Freilaufelement 12a noch weiter. Dabei fällt an dem Freilaufelement 12a die Durchlassspannung U_{D} ab. Gleichzeitig nimmt der Wicklungsstrom entsprechend der Zeitkonstante L/R exponentiell ab. Dabei bedeuten L die Induktivität und R der ohmsche Widerstand des ersten Wicklungsstrangs 2a. Sobald der Wicklungsstrom im ersten Wicklungsstrang 2a soweit abgeklungen ist, dass an dem Freilaufelement 12a eine kleinere Spannung abfällt als die Durchlassspannung U_{D}, sperrt das Freilaufelement 12a.

Da über das Freilaufelement 12a kein Strom in Sperrrichtung fließen kann, wird der Strom im Nulldurchgang abrupt unterbrochen und die Spannung am Freilaufelement 12a steigt sprunghaft an. In Fig. 2 ist die entsprechende Flanke 13 in der Gegen-EMK deutlich erkennbar. In dem Ersatzschaltbild in Fig. 1 ist für jeden Wicklungsstrang 2a, 2b, 2c jeweils eine Spannungsquelle vorgesehen, welche die Gegen-EMK erzeugt.

Diese Flanke 13 wird als Triggersignal verwendet, das die Erfassung eines ersten Messwerts für die Gegen-EMK auslöst. Zur Erfassung des Messwerts ist der erste Phasenanschluss 4a mit einer in der Zeichnung nicht näher dargestellten Spannungsmesseinrichtung verbunden. Die Messwerterfassung erfolgt nach dem Abklingen der nadelförmigen Spannungsspitze zum Zeitpunkt T₂ zwischen den in Fig. 2 mit T₂ und T₃ bezeichneten Zeitpunkten.

Während der Messphase wird der Phasenanschluss 4b eines zweiten Wicklungsstrangs 2b mit dem Versorgungsspannungspotential V_{Batt} und der Phasenanschluss 4c eines dritten Wicklungsstrangs 2c mit dem Massepotential verbunden.

Nun wird der Phasenanschluss 4b des zweiten Wicklungsstrangs 2b mit dem Massepotential und der Phasenanschluss 4c des dritten Wicklungsstrangs 2c mit dem Versorgungsspannungspotential V_{Batt} verbunden. Nach Abklingen eventueller, durch die Schaltvorgänge der entsprechenden Halbleiterschalter verursachter EMV-Störungen, wird ein zweiter Messwert für die Gegen-EMK erfasst. Um eventuelle Bauteiltoleranzen der Halbleiterschalter auszugleichen, wird der Mittelwert aus dem ersten und dem zweiten Messwert gebildet. Aus dem so erhaltenen Gegen-EMK-Messwert U_{G} und vorbekannten Kenngrößen des Elektromotors wird die Winkeldifferenz zwischen der Phasenlage des Erregerstroms und derjenigen der Gegen-EMK bestimmt.

Sobald der zweite Messwert erfasst ist, wird ab dem Zeitpunkt T₃ eine zweite Betriebsphase durchgeführt, bei welcher an alle drei Phasenanschlüsse 4a, 4b, 4c erneut derart pulsweitenmodulierte Phasenspannungen angelegt werden, dass in der Erregerwicklung ein magnetisches Dreh- bzw. Wanderfeld induziert wird, welches eine Relativbewegung zwischen dem Primärteil und dem Sekundärteil bewirkt. Bei der Pulsweitenmodulation werden die Ausgangsanschlüsse 5a, 5b, 5c abwechselnd mit dem Versorgungsspannungspotential V_{Batt} und mit dem Massepotential verbunden, wobei das Puls-Pausenverhältnis derart variiert wird, dass die Wicklungsstränge von etwa sinusförmigen, um jeweils 120° phasenversetzt zueinander angeordneten Wicklungsströmen durchflossen werden.

Anhand der zuvor ermittelten Phasenlage und der Zeitdauer der zweiten Betriebsphase wird ein Schätzwert für einen Zeitpunkt ermittelt, an dem der Nulldurchgang des Wicklungsstroms in einem zweiten Wicklungsstrang 2b kurz bevorsteht.

Sobald dieser Zeitpunkt erreicht ist, wird eine zweite Messphase eingeleitet, indem der Signalpegel des am zweiten Steuereingang eines zweiten Unterbrechers 8b anliegenden zweiten Steuersignal so verändert wird, dass der zweite Unterbrecher 8b öffnet. Nun wird die oben für den ersten Wicklungsstrang 2a beschriebene Messprozedur in entsprechender Weise für den zweiten Wicklungsstrang 2b durchgeführt.

Auf die zweite Messphase folgt eine dritte Betriebsphase und auf diese eine dritte Messphase, in welcher die oben für den ersten Wicklungsstrang 2a beschriebene Bestromungs- und Messprozedur in entsprechender Weise für den dritten Wicklungsstrang 2c durchgeführt wird.

Dann werden die vorstehenden Verfahrensschritte gegebenenfalls erneut durchlaufen.

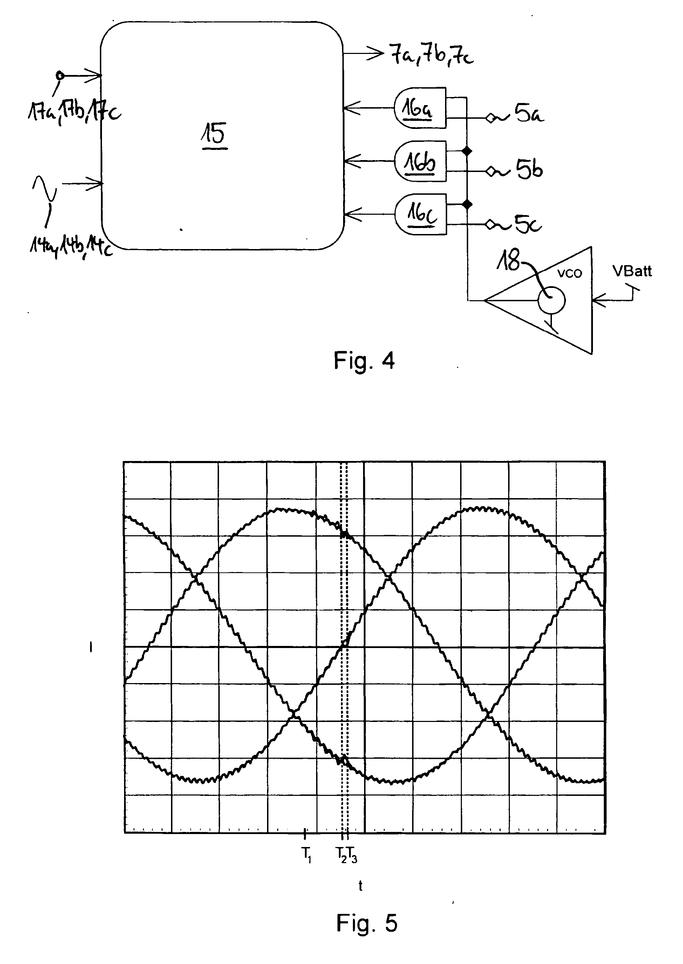

In Fig. 4 ist erkennbar, dass Sollwertsignale 14a, 14b, 14c für die pulsweitenmodulierten Phasenspannungen erzeugt und einem ersten Eingang eines Rechenwerks 15 zugeführt werden. In dem Rechenwerk 15 werden aus den Sollwertsignalen die ersten Steuersignale für die Ansteuerung der ersten Steuereingänge 7a, 7b, 7c der Halleiterschalter generiert. Das Rechenwerk 15 kann z.B. in ein ASIC integriert sein.

Das Rechenwerk 15 hat eine Addier- und Subtrahierschaltung. Zu Beginn einer neuen Pulsweitenmodulations-Periode wird zum Zählerstand der Addier- und Subtrahierschaltung zunächst der neue Sollwert des Sollwertsignals 14a, 14b, 14c aufaddiert. Das dem digitalen Sollwertsignal 14a, 14b, 14c entsprechende Analogsignal kann beispielweise den in Fig. 3 dargestellten Verlauf aufweisen. Entsprechend dem Sollwertsignal 14a, 14b, 14c wird die pulsweitenmodulierte Phasenspannung für die Erregerwicklung erzeugt.

Die Addier- und Subtrahierschaltung wird zur Erzeugung der ersten Steuersignale für die Ansteuerung der Halleiterschalter genutzt. Solange der Zählerstand der Addier- und Subtrahierschaltung größer als Null ist, wird an den Phasenanschluss 4a, 4b, 4c des dem Zählerstand zugeordneten Wicklungsstrangs 2a, 2b, 2c das Versorgungsspannungspotential V_{Batt} angelegt (Pulsphase).

Sobald der Zählerstand den Wert null erreicht, wird an den Phasenanschluss 4a, 4b, 4c des dem Zählerstand zugeordneten Wicklungsstrangs 2a, 2b, 2c das Massepotential angelegt (Pulspause).

Während der laufenden Periode kann das Sollwertsignal 14a, 14b, 14c durch Addition oder Subtraktion von Korrekturwerten angepasst werden. Die Korrekturwerte werden über einen Korrekturwerteingang 17 der Addier- und Subtrahierschaltung zugeführt. Dadurch können Ansteuerfehler, die beispielsweise durch das Ausbleiben der Pulsweitenmodulierung während einer Messphase auftreten, nach Beendigung der betreffenden Messphase korrigiert werden.

Wie in Fig. 4 erkennbar ist, wird der Zeittakt für das Dekrementieren des Zählerstands mit Hilfe eines spannungsgesteuerten Oszillators 18 erzeugt. Die Taktfrequenz des Zeittakts ist proportional zum Versorgungsspannungspotential V_{Bat}. Der am Ausgang des spannungsgesteuerten Oszillators 18 anliegende Zeittakt wird einem ersten Eingang eines UND-Gatters 19 zugeführt.

An einen zweiten Eingang des UND-Gatters 19 wird das am Ausgangsanschluss 5a, 5b, 5c der Endstufe 6 anliegende Signal angelegt, wenn das elektrische Potential am Ausgangsanschluss 5a, 5b, 5c z.B. dem halben Versorgungsspannungspotential V_{Batt}/2 entspricht. Dies hat den Vorteil, dass Einschalt- und Ausschaltverzögerungen der Leistungstransistoren automatisch kompensiert werden.

In Fig. 5 sind die Ströme in den Wicklungssträngen 2a, 2b, 2c dargestellt. Zunächst wurden die Ströme in den Wicklungssträngen 2a, 2b, 2c bei einer Ansteuerung der Erregerwicklung ohne die Messphasen zu Vergleichszwecken aufgezeichnet. Anschließend wurden die Ströme bei der erfindungsgemäßen Ansteuerung der Erregerwicklung mit den Messphasen aufgenommen und den zuerst genannten Strömen überlagert. Wie man sieht, sind die aus den Messphasen resultierenden Stromabweichungen sehr gering. Die Unterbrechung des Stromes sieht man im Zeitintervall zwischen T₂ und T₃ in der Mitte von Fig. 5. Störeffekte, die nicht vollständig ausgeregelt wurden, sind in Fig. 5 zwischen T₁ und T₃ im oberen und unteren Messsignal erkennbar.

Erwähnt werden soll noch, dass das Sollwertsignal 14a, 14b, 14c mit Hilfe eines Mikroprozessors erzeugt wird, der jeweils bei einem Interrupt einen neuen Sollwert ausgibt.

Mit Hilfe des Rechenwerks 15 ist es leicht möglich, durch lineare Interpolation der Sollwerte der digitalen Sollwertsignale 14a, 14b, 14c Zwischenwerte zu bestimmen. Dies hat den Vorteil, dass ein auf dem Mikroprozessor ablaufendes Betriebsprogramm weniger häufig durch Interrupts unterbrochen werden muss. Beispielsweise können für jede Pulsweitenmodulations-Periode jeweils 2 Sollwertadditionen durchgeführt werden, wobei für eine erste Pulsweitenmodulations-Periode in einem ersten Schritt ein vorhergehender Sollwert und in einem zweiten Schritt ein neuer Sollwert addiert werden. Für eine zweite Pulsweitenmodulations-Periode wird dagegen im ersten und zweiten Schritt der neue Sollwert addiert. Danach wiederholt sich das Szenario, indem jeweils abwechselnd der vorhergehende und der neue Sollwert addiert werden. Es ist auch möglich, mit Hilfe der Interpolation mehr als einen Zwischenwert zu bestimmen.

Die Taktfrequenz des Oszillators 18 kann größer sein als die Taktfrequenz, mit welcher der Interrupt erzeugt wird. Bevorzugt beträgt die Taktfrequenz des Oszillators 18 ein Vielfaches der des Interrupts und die einzelnen Sollwerte werden mehrfach ausgegeben. Die Taktfrequenz des Interrupts kann beispielsweise etwa 20 KHz und die des Oszillators 18 etwa 40 kHz betragen. Der Verlauf des Sollwertsignals 14a, 14b, 14c muss nicht notwendigerweise sinusförmig sein. Vielmehr sind auch andere Signalformen denkbar, beispielsweise eine rechteckförmige und/oder trapezförmige.

## Patentansprüche

1. Verfahren zum Betreiben eines Elektromotors, der ein Primärteil und ein Sekundärteil aufweist, wobei das Primärteil eine Wicklungsstränge (2a, 2b, 2c) aufweisende, mehrphasige Erregerwicklung hat, deren Phasenanschlüsse (4a, 4b, 4c) jeweils mit einem Ausgangsanschluss (5a, 5b, 5c) einer Endstufe (6) verbunden sind, wobei die Endstufe (6) zum Anlegen von Phasenspannungen an die Ausgangsanschlüsse (5a, 5b, 5c) steuerbare Halbleiterschalter hat, umfassend folgende Schritte:
a) Einleiten einer Betriebsphase durch Anlegen der Phasenspannungen an die Ausgangsanschlüsse (5a, 5b, 5c) der Endstufe (6), derart, dass in der Erregerwicklung ein magnetisches Wanderfeld induziert wird, welches eine Relativbewegung zwischen dem Primärteil und dem Sekundärteil bewirkt,
b) Abschalten der Phasenspannung an mindestens einem der Ausgangsanschlüsse (5a, 5b, 5c), um eine Messphase einzuleiten, wobei nach dem Abschalten der Phasenspannung der Wicklungsstrom in dem Wicklungsstrang (2a, 2b, 2c), für den die Phasenspannung abgeschaltet wurde, über mindestens ein, eine nichtlineare Kennlinie aufweisendes Freilaufelement (11a, 11 b, 11 c, 12a, 12b, 12c) geleitet und aufrechterhalten wird,
c) Messung der elektrischen Gegen-EMK, die in dem an diesem Ausgangsanschluss (5a, 5b, 5c) angeschlossenen Wicklungsstrang (2a, 2b, 2c) durch die Relativbewegung zwischen Primär- und Sekundärteil induziert wird, um die Winkeldifferenz zwischen der Phasenlage des Erregerstroms und derjenigen der Gegen-EMK zu bestimmen,
d) gegebenenfalls Wiederholen der Schritte a) bis c),
**dadurch gekennzeichnet, dass** eine beim Nulldurchgang des in diesem Wicklungsstrang (2a, 2b, 2c) fließenden Wicklungsstromes auftretende Flanke (13) in der Wicklungsspannung detektiert wird und als Triggersignal für die Messung der induzierten Gegen-EMK des betreffenden Wicklungsstrangs (2a, 2b, 2c) dient, dass nach einem Abklingen einer nadelförmigen Spannungsspitze zu einem Zeitpunkt T₂ eine Spannung der EMK U_{G} gemessen wird und dass aus der gemessenen Spannung der EMK U_{G} und vorbekannten Kenngrößen des Elektromotors eine Winkeldifferenz zwischen der Phasenlage des Erregerstroms und derjenigen Phasenlage der Gegen-EMK bestimmt wird.

2. Verfahren nach Anspruch 1, **dadurch gekennzeichnet, dass** das Freilaufelement (11a, 11b, 11c, 12a, 12b, 12c) eine Halbleiterdiode ist.

3. Verfahren nach Anspruch 1 oder 2, **dadurch gekennzeichnet, dass** die den einzelnen Wicklungssträngen (2a, 2b, 2c) zugeordneten Erregerströme und/oder deren gleitende Mittelwerte vorzugsweise einen etwa sinusförmigen Verlauf aufweisen und dass die an der Erregerwicklung anliegenden Phasenspannungen entsprechend pulsweitenmoduliert werden.

4. Verfahren nach einem der Ansprüche 1 bis 3, **dadurch gekennzeichnet, dass** nach dem Abschalten einer an einem ersten Ausgangsanschluss, (5a, 5b, 5c) der Endstufe (6) anliegenden ersten Phasenspannung der Wicklungsstrom des abgeschalteten Wicklungsstrangs (2a, 2b, 2c) über ein erstes Freilaufelement (11a, 11b, 11c, 12a, 12b, 12c) in Durchlassrichtung geleitet wird, dass dabei an dem Freilaufelement (11a, 11b, 11 c, 12a, 12b, 12c) eine Durchlassspannung (U_{D}) abfällt, und dass der Einfluss der Durchlassspannung (U_{D}) auf die an dem betreffenden Wicklungsstrang (2a, 2b, 2c) anliegende Spannung durch Verändern mindestens einer an wenigstens einem zweiten Ausgangsanschluss (5b, 5c, 5a) anliegenden zweiten Phasenspannung kompensiert wird.

5. Verfahren nach einem der Ansprüche 1 bis 4, **dadurch gekennzeichnet, dass** während der Messung einer an einem Wicklungsstrang (2a, 2b, 2c) anliegenden Gegen-EMK die Schaltzustände der für die Ansteuerung der anderen Wicklungsstränge (2b, 2c, 2a) der Erregerwicklung vorgesehenen Halbleiterschalter beibehalten werden.

6. Verfahren nach einem der Ansprüche 1 bis 5, **dadurch gekennzeichnet, dass** Sollwertsignale (14a, 14b, 14c) für die Phasenspannungen erzeugt werden, dass die Sollwertsignale (14a, 14b, 14c) mit an die Ausgangsanschlüsse (5a, 5b, 5c) angelegten Istwertsignalen für die Phasenspannungen verglichen werden, und dass beim Auftreten einer Abweichung zwischen den Sollwertsignalen (14a, 14b, 14c) und den Istwertsignalen während der Betriebsphase(n) die Ansteuerung der Erregerwicklung im Sinne einer Reduzierung der Abweichung verändert wird.

7. Verfahren nach einem der Ansprüche 1 bis 6, **dadurch gekennzeichnet, dass** die Sollwertsignale als zeitdiskrete Signale bereitgestellt werden, die jeweils mindestens zwei, unterschiedlichen Zeitpunkten zugeordnete Sollwerte aufweisen, dass jeweils mindestens ein Zwischenwert für die Sollwerte der einzelnen Phasenanschlüsse (4a, 4b, 4c) interpoliert wird, und dass die Sollwerte und der mindestens ein Zwischenwert jeweils mit einem an die Ausgangsanschlüsse (5a, 5b, 5c) angelegten Istwert für die Phasenspannungen verglichen werden und beim Auftreten einer Abweichung während der Betriebsphase(n) die Ansteuerung der Erregerwicklung im Sinne einer Reduzierung der Abweichung verändert wird.

8. Verfahren nach einem der Ansprüche 1 bis 7, **dadurch gekennzeichnet, dass** die Gegen-EMK(en) gegen einen Sternpunkt (3) der Erregerwicklung und/oder einen virtuellen Sternpunkt gemessen werden.

9. Verfahren nach einem der Ansprüche 1 bis 8, **dadurch gekennzeichnet, dass** in einer Messphase mindestens zwei Messwerte für die Gegen-EMK eines Wicklungsstrangs (2a, 2b, 2c) gemessen werden, dass beim Erfassen jedes Messwerts jeweils an die Ausgangsanschlüsse (5b, 5c, 5a) für die übrigen Wicklungsstränge (2b, 2c, 2a) unterschiedliche elektrische Potentiale ausgegeben werden, und dass die Schaltzustände der mit diesen Ausgangsanschlüssen (5b, 5c, 5a) verbundenen Halbleiterschalter beim Erfassen eines ersten Messwerts invers zu den Schaltzuständen gewählt werden, welche die Halbleiterschalter beim Erfassen eines zweiten Messwerts aufweisen.

10. Verfahren nach einem der Ansprüche 1 bis 9, **dadurch gekennzeichnet, dass** die Pulsweitenmodulationen der Phasenspannungen für die Wicklungsstränge (2a, 2b, 2c), an denen die Gegen-EMK während einer Messphase nicht gemessen wird, zueinander phasenversetzt durchgeführt werden, vorzugsweise mit einem Phasenversatz von einer halben Periode.

11. Verfahren nach einem der Ansprüche 1 bis 10, **dadurch gekennzeichnet, dass** die Taktfrequenz der Pulsweitenmodulation jeweils vor dem Einleiten einer Messphase erhöht wird.

12. Verfahren nach einem der Ansprüche 1 bis 11, **dadurch gekennzeichnet, dass** die Pulsweitenmodulation der Phasenspannungen derart in Abhängigkeit von einer die Endstufe (6) speisenden Betriebsspannung verändert wird, dass der Einfluss von Schwankungen der Betriebsspannung auf den Erregerstrom zumindest teilweise kompensiert wird.

13. Verfahren nach einem der Ansprüche 1 bis 12, **dadurch gekennzeichnet, dass** die Zeit, die nach dem Detektieren eines Nulldurchgangs des Wicklungsstromes vergeht, gemessen und mit einem Referenzwert verglichen wird, und dass in Abhängigkeit vom Ergebnis dieses Vergleichs eine weitere Messphase eingeleitet wird.

14. Verfahren nach einem der Ansprüche 1 bis 13, **dadurch gekennzeichnet, dass** die der Wicklungsstrom gemessen und mit einem Vergleichswert verglichen wird, und dass in Abhängigkeit vom Ergebnis dieses Vergleichs eine weitere Messphase eingeleitet wird.

## Claims

1. Method for operating an electric motor, which has a primary part and a secondary part, wherein the primary part has a polyphase field winding having winding phases (2a, 2b, 2c), the phase connections (4a, 4b, 4c) of said field winding each being connected to an output connection (5a, 5b, 5c) of an output stage (6), wherein the output stage (6) has controllable semiconductors for applying phase voltages to the output connections (5a, 5b, 5c), said method comprising the following steps:
a) introducing an operating phase by applying the phase voltages to the output connections (5a, 5b, 5c) of the output stage (6) in such a way that a travelling magnetic field is induced in the field winding, which travelling magnetic field effects a relative movement between the primary part and the second part,
b) disconnecting the phase voltage at at least one of the output connections (5a, 5b, 5c) in order to introduce a measurement phase, wherein once the phase voltage has been disconnected, the winding current in the winding phase (2a, 2b, 2c) for which the phase voltage has been disconnected is conducted and maintained via at least one freewheeling element (11a, 11b, 11c, 12a, 12b, 12c) having a nonlinear characteristic,
c) measuring the electrical back-emf, which is induced in the winding phase (2a, 2b, 2c) connected to this output connection (5a, 5b, 5c) by virtue of the relative movement between the primary and secondary parts in order to determine the angular difference between the phase angle of the field current and that of the back-emf,
d) possibly repeating steps a) to c),
**characterized in that** an edge (13) in the winding voltage which occurs during the zero crossing of the winding current flowing in this winding phase (2a, 2b, 2c) is detected and acts as trigger signal for the measurement of the induced back-emf of the relevant winding phase (2a, 2b, 2c), **in that** once a needle-shaped voltage peak has decayed at time T₂, a voltage of the emf U_{G} is measured, and **in that** an angular difference between the phase angle of the field current and the phase angle of the back-emf is determined from the measured voltage of the emf U_{G} and previously known characteristic variables for the electric motor.

2. Method according to Claim 1, **characterized in that** the freewheeling element (11a, 11b, 11c, 12a, 12b, 12c) is a semiconductor diode.

3. Method according to one of Claims 1 or 2, **characterized in that** the field currents associated with the individual winding phases (2a, 2b, 2c) and/or the sliding mean values thereof preferably have an approximately sinusoidal profile, and **in that** the phase voltages present at the field winding are correspondingly pulse-width-modulated.

4. Method according to one of Claims 1 to 3, **characterized in that**, once a first phase voltage present at a first output connection (5a, 5b, 5c) of the output stage (6) has been disconnected, the winding current of the disconnected winding phase (2a, 2b, 2c) is conducted via a first freewheeling element (11a, 11b, 11c, 12a, 12b, 12c) in the forward direction, **in that**, in the process, a forward voltage (U_{D}) drops across the freewheeling element (11a, 11b, 11c, 12a, 12b, 12c), and **in that** the influence of the forward voltage (U_{D}) on the voltage present at the relevant winding phase (2a, 2b, 2c) is compensated for by varying at least one second phase voltage present at at least one second output connection (5b, 5c, 5a).

5. Method according to one of Claims 1 to 4, **characterized in that**, during the measurement of a back-emf present at a winding phase (2a, 2b, 2c), the switching states of the semiconductor switches provided for driving the other winding phases (2b, 2c, 2a) of the field winding are maintained.

6. Method according to one of Claims 1 to 5, **characterized in that** setpoint value signals (14a, 14b, 14c) for the phase voltages are generated, **in that** the setpoint value signals (14a, 14b, 14c) are compared with actual value signals for the phase voltages, which actual value signals are applied to the output connections (5a, 5b, 5c), and **in that**, in the event of the occurrence of a discrepancy between the setpoint value signals (14a, 14b, 14c) and the actual value signals during the operating phase(s), the driving of the field winding is varied in order to reduce the discrepancy.

7. Method according to one of Claims 1 to 6, **characterized in that** the setpoint value signals are provided as time-discrete signals, which have at least two setpoint values associated with different times, **in that** in each case at least one intermediate value for the setpoint values of the individual phase connections (4a, 4b, 4c) is interpolated, and **in that** the setpoint values and the at least one intermediate value are each compared with an actual value for the phase voltages, which is applied to the output connections (5a, 5b, 5c), and, in the event of the occurrence of a discrepancy during the operating phase(s), the driving of the field winding is varied in order to reduce the discrepancy.

8. Method according to one of Claims 1 to 7, **characterized in that** the back-emf(s) is/are measured with respect to a neutral point (3) of the field winding and/or a virtual neutral point.

9. Method according to one of Claims 1 to 8, **characterized in that**, in one measurement phase, at least two measured values for the back-emf of a winding phase (2a, 2b, 2c) are measured, **in that**, during the detection of each measured value, different electrical potentials are output in each case to the output connections (5b, 5c, 5a) for the remaining winding phases (2b, 2c, 2a), and **in that** the switching states of the semiconductor switches connected to these output connections (5b, 5c, 5a) are selected, during the detection of a first measured value, so as to be inverse to the switching states which the semiconductor switches have during the detection of a second measured value.

10. Method according to one of Claims 1 to 9, **characterized in that** the pulse-width modulations of the phase voltages for the winding phases (2a, 2b, 2c) at which the back-emf is not measured during a measurement phase are performed with a phase shift with respect to one another, preferably with a phase shift of half a cycle.

11. Method according to one of Claims 1 to 10, **characterized in that** the clock frequency of the pulse-width modulation is in each case increased prior to the introduction of a measurement phase.

12. Method according to one of Claims 1 to 11, **characterized in that** the pulse-width modulation of the phase voltages is varied depending on an operating voltage feeding the output stage (6) in such a way that the influence of fluctuations in the operating voltage on the field current is at least partially compensated for.

13. Method according to one of Claims 1 to 12, **characterized in that** the time which passes after detection of a zero crossing of the winding current is measured and compared with a reference value, and **in that** a further measurement phase is introduced depending the result of this comparison.

14. Method according to one of Claims 1 to 13, **characterized in that** the winding current is measured and compared with a comparison value, and **in that** a further measurement phase is introduced depending on the result of this comparison.

## Revendications

1. Procédé pour faire fonctionner un moteur électrique, lequel présente une partie primaire et une partie secondaire, la partie primaire possédant un enroulement excitateur multiphasé qui présente des branches d'enroulement (2a, 2b, 2c), dont les bornes de phase (4a, 4b, 4c) sont respectivement reliées à une borne de sortie (5a, 5b, 5c) d'un étage final (6), l'étage final (6) comprenant des commutateurs semiconducteurs commandables pour appliquer des tensions de phase aux bornes de sortie (5a, 5b, 5c), comprenant les étapes suivantes :
a) initiation d'une phase de fonctionnement en appliquant les tensions de phase aux bornes de sortie (5a, 5b, 5c) de l'étage final (6) de telle sorte qu'un champ magnétique progressif soit induit dans l'enroulement excitateur, lequel provoque un mouvement relatif entre la partie primaire et la partie secondaire,
b) déconnexion de la tension de phase sur au moins l'une des bornes de sortie (5a, 5b, 5c) afin d'initier une phase de mesure, le courant d'enroulement dans la branche d'enroulement (2a, 2b, 2c) pour laquelle la tension de phase a été déconnectée, après la déconnexion de la tension de phase, étant acheminé puis maintenu par au moins un élément de roue libre (11a, 11b, 11c, 12a, 12b, 12c) qui présente une courbe non linéaire,
c) mesure de la force contre-électromotrice électrique qui est induite dans la branche d'enroulement (2a, 2b, 2c) raccordée à cette borne de sortie (5a, 5b, 5c) par le mouvement relatif entre la partie primaire et la partie secondaire, afin de déterminer la différence angulaire entre la phase du courant d'excitation et celle de la force contre-électromotrice,
d) le cas échéant, répétition des étapes a) à c),
**caractérisé en ce qu'**un front (13) dans la tension d'enroulement qui se produit lors du passage par zéro du courant d'enroulement circulant dans cette branche d'enroulement (2a, 2b, 2c) est détecté et sert de signal de déclenchement pour la mesure de la force contre-électromotrice induite de la branche d'enroulement (2a, 2b, 2c) concernée, **en ce qu'**une tension de la force électromotrice U_{G} est mesurée après un évanouissement d'une pointe de tension en forme d'aiguille à l'instant T₂ et **en ce qu'**une différence angulaire entre la phase du courant d'excitation et la phase de la force contre-électromotrice est déterminée à partir de la tension mesurée de la force électromotrice U_{G} et de grandeurs caractéristiques connues à l'avance du moteur électrique.

2. Procédé selon la revendication 1, **caractérisé en ce que** l'élément de roue libre (11a, 11b, 11c, 12a, 12b, 12c) est une diode en semiconducteur.

3. Procédé selon la revendication 1 ou 2, **caractérisé en ce que** les courants d'excitation associés aux branches d'enroulement (2a, 2b, 2c) individuelles et/ou leurs valeurs moyennes glissantes présentent de préférence un tracé approximativement sinusoïdal et **en ce que** les tensions de phase appliquées à l'enroulement excitateur sont modulées en largeur d'impulsion en conséquence.

4. Procédé selon l'une des revendications 1 à 3, **caractérisé en ce qu'**après la déconnexion d'une première tension de phase appliquée à une première borne de sortie (5a, 5b, 5c) de l'étage final (6), le courant d'enroulement de la branche d'enroulement (2a, 2b, 2c) déconnectée est acheminé par un premier élément de roue libre (11a, 11b, 11c, 12a, 12b, 12c) dans le sens passant, **en ce qu'**une tension directe (U_{D}) chute alors aux bornes de l'élément de roue libre (11a, 11b, 11c, 12a, 12b, 12c) et **en ce que** l'influence de la tension directe (U_{D}) sur la tension appliquée à la branche d'enroulement (2a, 2b, 2c) concernée est compensée en modifiant au moins une deuxième tension de phase appliquée à au moins une deuxième borne de sortie (5b, 5c, 5a).

5. Procédé selon l'une des revendications 1 à 4, **caractérisé en ce que** pendant la mesure d'une force contre-électromotrice appliquée à une branche d'enroulement (2a, 2b, 2c), les états de commutation des commutateurs semiconducteurs prévus pour l'excitation des autres branches d'enroulement (2b, 2c, 2a) de l'enroulement excitateur sont maintenus.

6. Procédé selon l'une des revendications 1 à 5, **caractérisé en ce que** des signaux de valeur de consigne (14a, 14b, 14c) sont générés pour les tensions de phase, **en ce que** les signaux de valeur de consigne (14a, 14b, 14c) sont comparés avec des signaux de valeur réelle des tensions de phase présents sur les bornes de sortie (5a, 5b, 5c) et **en ce que** lorsqu'un écart se produit entre les signaux de valeur de consigne (14a, 14b, 14c) et les signaux de valeur réelle pendant la ou les phases de fonctionnement, l'excitation de l'enroulement excitateur est modifiée dans le sens d'une réduction de l'écart.

7. Procédé selon l'une des revendications 1 à 6, **caractérisé en ce que** les signaux de valeur de consigne sont délivrés sous la forme de signaux discrets dans le temps qui présentent respectivement au moins deux valeurs de consigne associées à des instants différents, **en ce qu'**au moins une valeur intermédiaire est à chaque fois interpolée pour les valeurs de consigne des bornes de phase (4a, 4b, 4c) individuelles et **en ce que** les valeurs de consigne et l'au moins une valeur intermédiaire sont à chaque fois comparées avec une valeur réelle des tensions de phase présente sur les bornes de sortie (5a, 5b, 5c) et, lorsqu'un écart se produit pendant la ou les phases de fonctionnement, l'excitation de l'enroulement excitateur est modifiée dans le sens d'une réduction de l'écart.

8. Procédé selon l'une des revendications 1 à 7, **caractérisé en ce que** la ou les forces contre-électromotrices sont mesurées par rapport à un point commun (3) de l'enroulement excitateur et/ou un point commun virtuel.

9. Procédé selon l'une des revendications 1 à 8, **caractérisé en ce que** dans une phase de mesure, au moins deux valeurs mesurées de la force contre-électromotrice d'une branche d'enroulement (2a, 2b, 2c) sont mesurées, **en ce que** lors de la détection de chaque valeur mesurée, des potentiels électriques différents sont délivrés respectivement sur les bornes de sortie (5b, 5c, 5a) pour les autres branches d'enroulement (2b, 2c, 2a) et **en ce que** lors de la détection d'une première valeur mesurée, les états de commutation des commutateurs semiconducteurs reliés à ces bornes de sortie (5b, 5c, 5a) sont choisis inverses des états de commutation que présentent les commutateurs semiconducteurs lors de la détection d'une deuxième valeur mesurée.

10. Procédé selon l'une des revendications 1 à 9, **caractérisé en ce que** les modulations en largeur d'impulsion des tensions de phase pour les branches d'enroulement (2a, 2b, 2c) sur lesquelles la force contre-électromotrice n'est pas mesurée pendant une phase de mesure, sont effectuées avec un déphasage mutuel, de préférence avec un déphasage d'une demi-période.

11. Procédé selon l'une des revendications 1 à 10, **caractérisé en ce que** la fréquence d'horloge de la modulation en largeur d'impulsion est à chaque fois augmentée avant d'initier une phase de mesure.

12. Procédé selon l'une des revendications 1 à 11, **caractérisé en ce que** la modulation en largeur d'impulsion des tensions de phase est modifiée en fonction d'une tension de service qui alimente l'étage final (6) de telle sorte que l'influence des fluctuations de la tension de service sur le courant d'excitation soit compensée au moins partiellement.

13. Procédé selon l'une des revendications 1 à 12, **caractérisé en ce que** le temps qui s'écoule après la détection d'un passage par zéro du courant d'enroulement est mesuré et comparé avec une valeur de référence et **en ce qu'**une phase de mesure supplémentaire est initiée en fonction du résultat de cette comparaison.

14. Procédé selon l'une des revendications 1 à 13, **caractérisé en ce que** le courant d'enroulement est mesuré et comparé avec une valeur comparative et **en ce qu'**une phase de mesure supplémentaire est initiée en fonction du résultat de cette comparaison.
